# EUROPEAN PATENT SPECIFICATION

(11) **EP 3 706 294 B1**
(45) Date of publication and mention of the grant of the patent: **30.03.2022**
(21) Application number: 20160067.3
(22) Date of filing: 28.02.2020
(51) Int. Cl.: H02K 13/04, H01R 4/26, H01R 39/32, H01R 43/06

(54) **ROTOR FOR A UNIVERSAL ELECTRIC MOTOR AND RELATIVE METHOD AND APPARATUS FOR OBTAINING THE SAME**
ROTOR FÜR EINEN UNIVERSELLEN ELEKTROMOTOR UND ZUGEHÖRIGES VERFAHREN UND VORRICHTUNG ZUR HERSTELLUNG DAVON
ROTOR POUR UN MOTEUR ÉLECTRIQUE UNIVERSEL ET PROCÉDÉ ET APPAREIL ASSOCIÉS POUR L'OBTENIR

(30) Priority: 08.03.2019 IT 201900003375
(43) Date of publication of application: 09.09.2020
(73) Proprietor: Nidec Sole Motor Corporation S.r.l., 33170 Pordenone (IT)
(72) Inventor: BARABANI, Riccardo, 33170 Pordenone (IT)
(74) Representative: Cercenà, Alice

(56) References cited:
- CH-A- 478 466
- DE-U1-202009 018 610
- FR-A1- 2 801 740
- GB-A- 2 005 927

## Description

### TECHNICAL FIELD OF INVENTION

The present invention is relative to a rotor for a universal electric motor and to the related method and apparatus for obtaining the same. The present invention also refers to a process for associating at least a hook of a commutator of a rotor to at least a portion of a rotor winding wire.

### PRIOR ART

In general, a rotor comprises a shaft on which is associated a rotor lamination stack on which are formed cuttings that contain wire windings conventionally made of copper. On the shaft is also associated a commutator made up of prism-like bars, also usually made of copper, circumferentially adjacent to each other to form a cylindrical body. On the outer surface of the copper bars can slide the brushes that form the contacts with the electrical circuit external to the rotor.

The winding wires are generally coated with electrically insulating enamel so as to be electrically insulated, thus preventing the formation of electrical contacts at every point of contact between the different windings around the rotor lamination stack.

Various means and methods are used to couple the winding wires electrically and mechanically to the commutator bars, for example, at the ends of the bars can be provided U-shaped hooks, around which are arranged one or more coils of the winding wires.

The hooks are then bent so that their inner surface is closed around the wire around which they are placed, thus obtaining a mechanical connection. In general, the hooks and the bars have flat inner surfaces, as shown for example in document DE202009018610. However, in some cases, as disclosed for example in document GB2005927, a slot is formed on the inner surface of the hook, so as to allow more space for the wire during the phase of closing the hook as an attempt to limit its deformation.

After having closed the hooks around the wire, an electric current is passed through electrodes appropriately positioned on the hooks so as to cause the enamel to be melted locally by the heat that is generated, thus guaranteeing the electrical contact between the conductive material of the wire and of the hook, and thereby obtaining a sort of welding.

Document FR2801740 discloses a commutator of a rotor comprising conductive blades having hook-shaped ends for winding the wire, wherein a protruding area formed by a series of teeth having transverse orientation and longitudinally development is obtained all along the internal face of each hooks by diamond point knurling so as to form peaks which, when the hooks are bent, penetrate into wire, piercing the protective layer of its whole section contour, thus operating the direct electrical contact of the hooks with the conductive body of the wire.

However, in this way, the resistant section of the wire may be excessively deformed, causing the risk of local breaks of the wire. Furthermore, the protruding area provided on the internal surface of the hooks does not allow the correct positioning of the wire, which could inadvertently slip below the closing point of the hook and therefore be damaged.

A method and an apparatus for establishing connections between commutator blades and a wire of electrical machines is disclosed in document CH478466.

The cost competition in the field has recently caused the replacement of copper, traditionally used in rotor windings, with other less valuable metals, like for example aluminum.

However, unlike copper, with a melting temperature of about 1084°C, aluminum has a considerably lower melting temperature, that is, about 660°C, which is close to the temperature reached during the passage of electric current on the hooks of the commutator, which is necessary for removing the insulating enamel.

Thus, the heat generated in this phase, necessary to locally melt the insulating enamel, entails an excessive deformation of the aluminum wire and a reduction of its resistant cross section, to the point of causing the melting of the metal and the localized breakage, thus affecting the effectiveness of the connection between the wire and the hook of the commutator, both electrically and mechanically; which translates into the failure of operation of the motor and the consequent increase in the amount of production waste.

To avoid this drawback, the Applicant has conceived an alternative technology, described in Italian Patent Application 102016000009415, which uses ultrasound to obtain a cold welding between the hooks of the bars, made of copper, and the wire of the rotor windings, made of aluminum and covered with electrically insulating enamel.

This solution calls for the use of a sonotrode adapted to close with a predetermined force the hooks of the commutator against one portion of the wire and subsequently to apply on them a high-frequency oscillation. In addition, advantageously, the inner surface of each hook is provided with a projection which, the moment when the hook closes against the wire and there is a high-frequency vibration, it engraves the upper surface of the insulating enamel that covers the wire until a partial removal of the same is obtained, thus allowing the direct contact between the material of the wire and the hook and the electrical connection between the two elements.

In practice, the localized removal of the electrically insulating enamel takes place thanks to the combined effect of punching and rubbing: therefore, the maximum temperature developed during the above described process remains sufficiently low to completely preserve the integrity and the physical and metallurgical characteristics of the aluminum wire.

Although this procedure is practical, it requires a precise monitoring of the process parameters, particularly in the case in which it is carried out in a highly automated industrial plant.

### SUMMARY OF THE INVENTION

The main objective of the subject matter of the present invention is to overcome the drawbacks of the prior art by devising a rotor for a universal electric motor in which the electrical and mechanical connection between the winding wires, made with a first conductive material alternative to copper and in particular one having a melting temperature lower than for copper, and the hooks of the commutator bars, made with a second conductive material, for example copper, is obtained in a stable and reliable manner, without deteriorating any component of the rotor.

A further objective is to devise a rotor for a universal electric motor that can be obtained by means of an easily implemented process in a highly automated industrial plant.

Another objective of the present invention is to devise an apparatus that makes it possible to obtain a rotor for a universal electric motor in a simple and effective manner.

The above task and objectives, and others that will become more evident hereunder, are achieved with a rotor for a universal electric motor, with a method for associate a hook of a commutator to a portion of a wire, with an apparatus for obtaining a rotor for a universal electric motor, and with a process for realizing a rotor for a universal electric motor as defined respectively in claims 1, 7, 8 and 11.

### BRIEF DESCRIPTION OF THE DRAWINGS

Further characteristics and the advantages of a rotor for a universal electric motor according to the present invention and of the relative production process will become more evident from the following description of particular, but not exclusive embodiments, illustrated purely by way of non-limiting example with reference to the following figures:
- figures 1A and 1B illustrate respectively, in a perspective view and a lateral view, a rotor according to the present invention;
- figures 2A and 2B illustrate respectively, in a perspective view and a lateral view, a commutator of a rotor according to the present invention;
- figures 3A and 3B illustrate the details within the rings respectively of figure 2A and 3A appropriately enlarged;

- figures 4A and 4B illustrate, in a lateral view, a bar of a commutator of a rotor according to the present invention respectively before and after the positioning of the winding wire;
- figures 5A and 5B illustrate in a lateral view, a bar of a commutator of a rotor according to the present invention, arranged at an initial or terminal position of the winding wire, respectively before and after the positioning of an initial or terminal portion of a rotor according to the present invention;
- figures 6A and 6B illustrate, in a perspective view, a first and a second tool suitable for forming a rotor according to the present invention;
- figures 7A and 7B illustrate, respectively in a lateral view and a perspective view, an apparatus embodying at least a tool shown in the previous figures 6A, 6B, for forming a rotor according to the present invention;
- figure 8 illustrates, in a schematic enlarged view, the geometry of a cutting formed on a commutator of a rotor according to the present invention.

### DETAILED DESCRIPTION OF THE INVENTION

It is specified herein that the directional terms used to describe the present invention, such as "above, under, vertical, horizontal, lower, upper, radial and circumferential", as well as any other similar directional term, should be interpreted with reference to a rotor as illustrated in the accompanying figures.

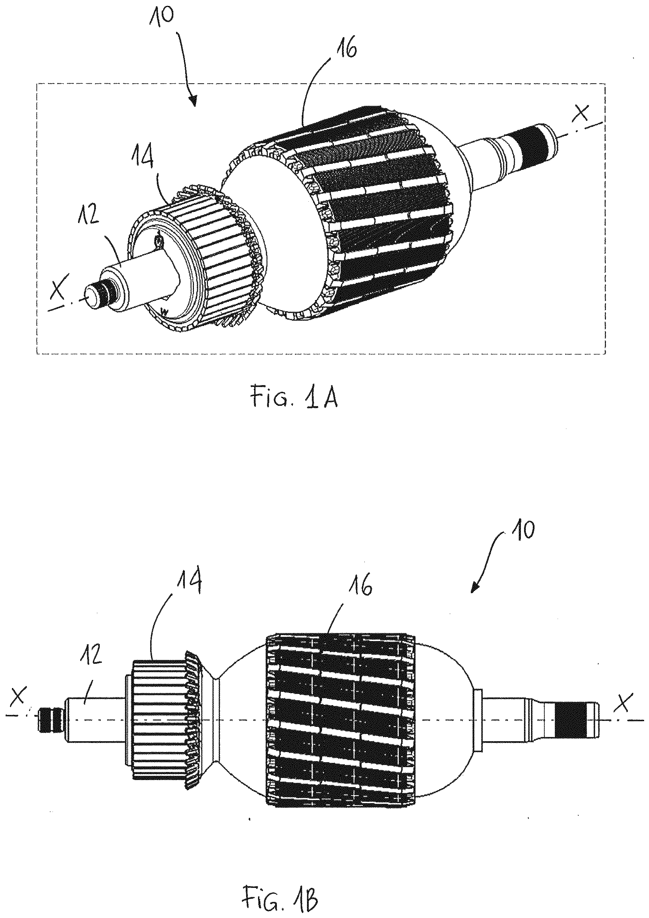

With reference in particular to figures 1A and 1B, numeral 10 indicates a rotor for a universal electric motor or a general rotor for an electric motor according to the present invention.

The universal electric motors are generally developed to operate with different forms of electric energy, for example direct current, alternating current or still other currents and with the capabilities of achieving rotation speeds for example with intervals from 0 to 20,000 rpm in both directions of rotation, using variable current/power ratios, or variable A/W/RPM ratios.

The rotor 10 comprises a shaft 12, which extends along a first axis X-X, on which are splined coaxially with each other a commutator 14 and a rotor lamination stack 16. Around the rotor lamination stack 16 are arranged the wires, not visible in figures 1A and 1B, that form the rotor winding. The wires are made advantageously with a first conductive material, and are coated with an electrically insulating material, such as an electrically insulating enamel or an electrically insulating paint or other equivalent coating.

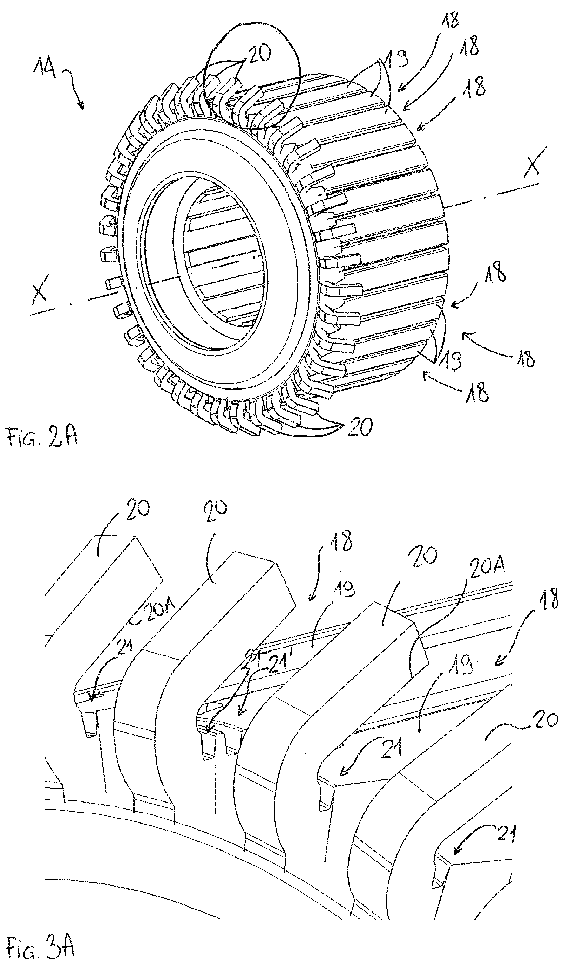

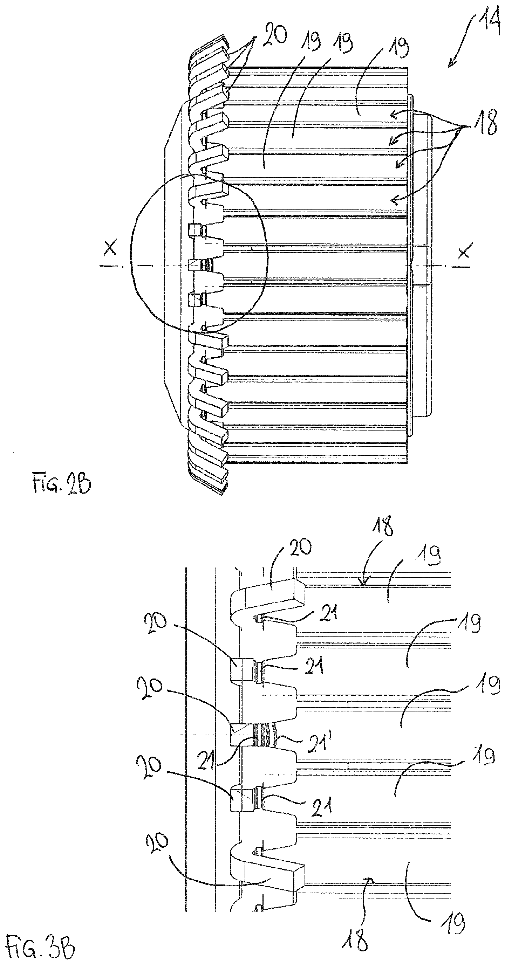

As is illustrated in figures 2A and 2B, the commutator 14 comprises a cylindrical body formed by a plurality of bars 18 arranged circumferentially adjacent to each other but electrically separated from each other, each comprising a body element 19, shaped essentially as a flat parallelepiped, having a longitudinal extension in a direction parallel to the axis X-X of said shaft 12, whose end facing said rotor lamination stack 16 is provided with a hook 20, essentially obtained as a flexible appendix, having the function of holding in position a portion 24 of winding wire 22, thus achieving an electrical contact with the same. Each hook 20 is preferably obtained in a single body with the respective bar 18.

The commutator 14 is connected to the wires 22 of the rotor winding that are arranged to form a coil around the hook 20 so that at least a portion 24 of each wire 22 is arranged between the hook 20 and the respective bar 18 from which the hook 20 extends.

Each bar 18 is made from a second conductive material, for example copper or an alloy comprising copper. Preferably, the first conductive material is a metal having a melting temperature lower than the melting temperature of the second conductive material; for example, said first conductive material is aluminum or an alloy comprising aluminum.

Alternatively, the first conductive material and the second conductive material can be the same, using substantially the same material to obtain each bar and the wires, for example, using for both copper or aluminum or another material, or they can be inverted, thus obtaining bars made from the first conductive material and the winding wires made with the second conductive material.

Each hook 20 is elastically deformable from a first initial open position, wherein it is detached from the surface of the bar 18 from which it extends and allows the positioning of a portion 24 of wire 22 below it, and a final closed position, wherein it embraces with its internal surface 20A said portion 24 of wire 22 and approaches the surface of the body element 19 of the relative bar 18.

According to a rather advantageous characteristic of the present invention, as can be better seen in figures 3A and 3B, in an area between the internal surface 20A of each of said hooks 20 and the corresponding bar 18 is provided at least a single first cutting 21, recessed with respect to the surface of the body 19 of the bar 18 and configured so as to partially contain the relative portion 24 of the winding wire 22 by interference fit due to the pressure exercised by the hook 20 in the passage from the open position to the closed position.

Each of said first cuttings 21 is made advantageously like a blind seat, extending in a direction substantially transversal to the extension of the bars 18, and therefore in a radial position along a circumference with respect to the extension of the X-X axis of the rotor 10, and preferably open at the sides. If necessary, each of said first cuttings 21 can extend in a slightly curved path around said hook 20 to create a lead-in for positioning the wire 22 around the hook 20.

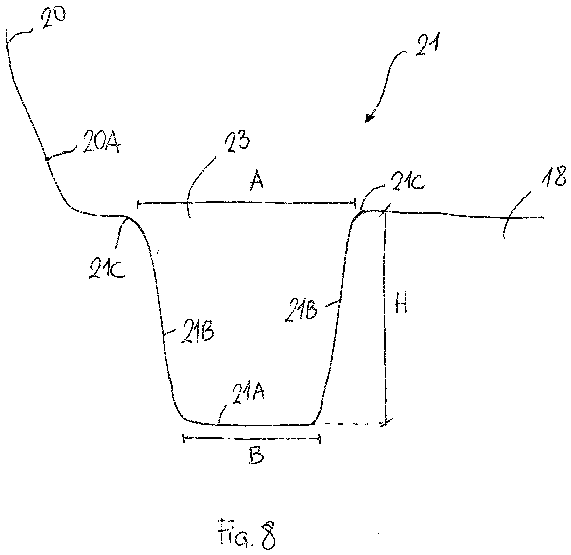

According to a characteristic of the present invention, as can be assumed from figure 8, each cutting 21 has preferably an essentially trapezoidal cross section, defined by a bottom wall 21A, substantially flat, and by a pair of facing and slightly divergent lateral walls 21B, to form a top opening 23 with a width A, lying substantially flush with the surface of the bar 18 and defined by a pair of mutually opposite and facing edge portions 21C.

Said edge portions 21C are adapted to give a round shape to the lateral walls 21B of the seat 21 to smoothly fit with the surface of the bar 18 or the internal surface 20A of the hook 20 and are advantageously shaped so as to have a smaller radius of curvature, approximating a sharp edge.

Further, advantageously, the width A of said top opening 23, measured essentially as a distance between said edge portions 21C, is smaller than the diameter D of the portion 24 of winding wire 22 which it is to receive, and in particular it is comprised between 70-90%, and preferably 80% of said diameter D, understood as the sum of the diameter of the aluminum wire and of the electrically insulating enamel.

Finally, the depth H of the cuttings 21, that is, the distance between said top opening 23 and said bottom wall 21A, is advantageously smaller than the diameter D of the wire 22, and preferably comprised between 70 and 90% of the latter.

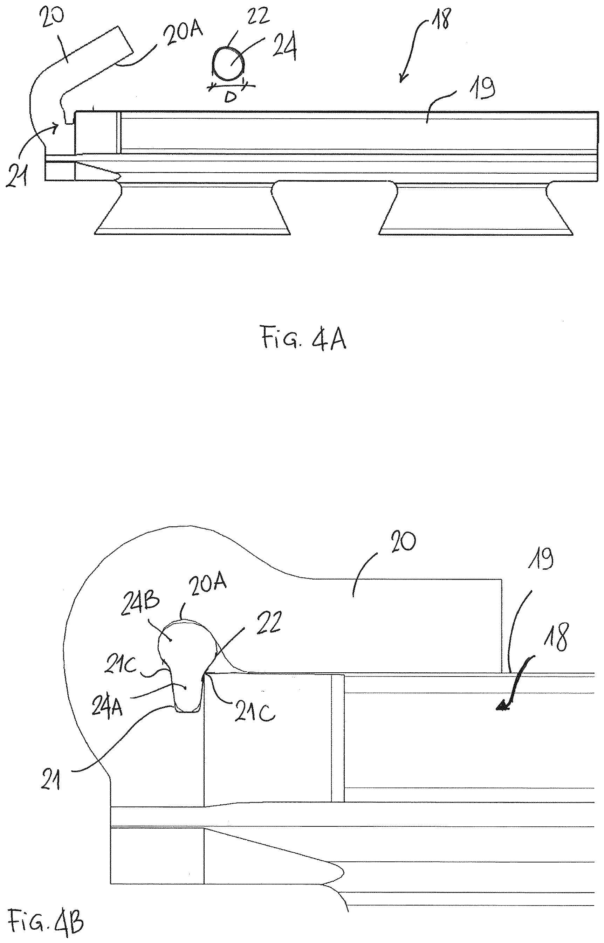

As can be seen from the comparison of the figures 4A and 4B, when the winding wire 22 is positioned in a known manner around the hooks 20 of the commutator 14, and they are switched from the open position to the closed position, closing with a predetermined force over the portion 24 of the wire 22 to be retained, said portion is pressed toward the inside of the corresponding cutting 21.

However, since the width A of the top opening 23 of the cutting 21 is smaller than the dimension D of the diameter of the wire 22, when said hook 20 is moved from the open position to the closed position, the edge portions 21C of said opening 23 locally remove by friction and abrasion the electrically insulating enamel that covers the portion 24 of the wire 22, thus advantageously allowing the direct contact between the conductive material that makes up the wire 22 and the conductive material of the hook 20 and establishing an electrical connection.

Furthermore, thanks to the specific geometry of each of said first cuttings 21, and in particular the depth H and the width A of the top opening 23, the wire 22 will be only partially received by interference within it during the operation of closing the hooks 20, becoming plastically deformed so as to allow only a first portion 24A of its cross section, for example the lowermost one, to penetrate inside the cutting 21, while a second portion of cross section 24B, complementary to the first one and for example located above it, remains outside the cutting 21, surrounded externally by the internal surface 20A of the hook 20. In this manner, advantageously, the resistant section of the wire 22 is not excessively compressed, thus avoiding the risk of local breaks.

Summarizing, the process for associating at least one hook 20 of a bar 18 of a commutator 14 of a rotor 10 according to the present invention to at least one portion 24 of wire 22 of a rotor winding coated with electrically insulating enamel, comprises the following steps:
- positioning the commutator 14 on a support;
- winding at least one portion 24 of wire 22 around said hook 20;
- displacing said hook 20 from an initial open position to a final closed position wherein the hook 20 embraces said portion 24 of wire 22 and is approached to the bar 18, pressing down with a predetermined force so that the edge portions 21C defining the top opening 23 of said first single cutting 21 locally remove by friction and abrasion the electrically insulating enamel that coats said portion 24 of wire 22 to enable the direct contact between the first conductive material and the second conductive material and therefore the electrical connection between said wire 22 and said bar 18.

During the operation of closing the hooks, and subsequently to the same, it is also possible to apply a predetermined energy appropriate to develop on the hooks 20 a temperature that is sufficient to melt and partially deform in a localized manner the insulating enamel of the wire. However, thanks to the presence of the cuttings 21 on the area between the internal surface 20A of the hooks 20 and the corresponding bar 18, the insulating enamel has already been removed by friction and abrasion through the movement of closing the hooks 20 and consequently the temperature to develop by means of the application of electric energy remains sufficiently low to preserve the integrity and physical characteristics of the wire 22 and the bars 18 of the commutator 14.

Preferably, at least two of the bars 18 of the commutator 14, for example arranged on diametrically opposite sides of the same, also comprise a second single cutting 21', arranged adjacent to said first single cutting 21 and nearer to the body 19 of the corresponding bar 18, adapted to cooperate with and hold an end portion of the winding wire 22.

Said second cuttings 21' can be identical to said first cuttings 21; according to a preferred alternative, as can be better appreciated from figures 3A and 3B, said second cuttings 21' have a cross section with a shape essentially identical to the one of the first cuttings 21 and, although they maintain a cross section substantially constant in their transversal extension with respect the respective bars 18, they extend preferably along a path that is more curved around said hook 20, so as to provide a lead-in to the correct positioning of the relative end portion of the wire 22 under the hook 20.

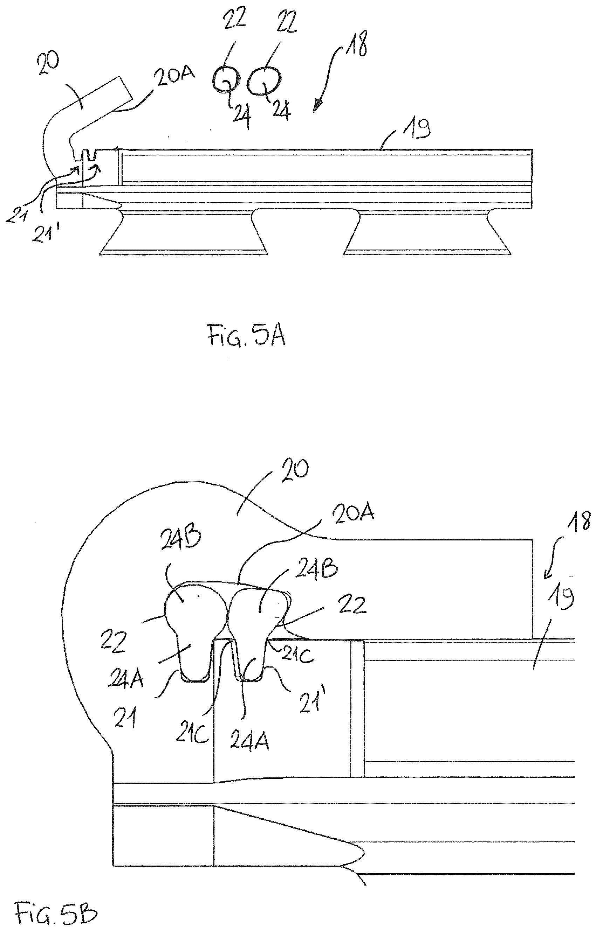

In figures 5A and 5B is shown an example wherein the hook 20 comprises a first and a second cutting 21, 21', respectively in a step previous to the positioning of the portions of wire 22 and subsequent to the positioning of the same and to the closing of the hook 20. The function of said second cutting 21' is essentially the same as the one described above in relation to said first cuttings 21.

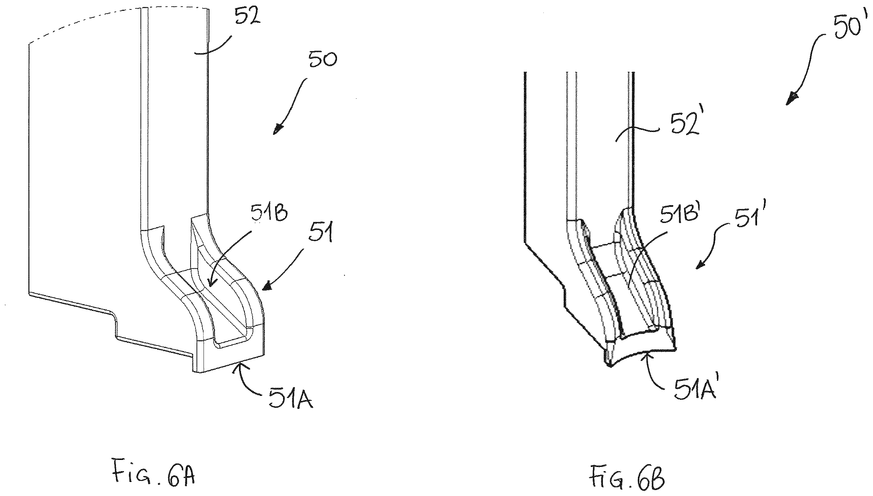

With reference to figure 6A is shown a first tool 50 adapted for forming said first cuttings 21 in a commutator 14, in particular by means of cold forming by pressure. Said first tool 50 is made from a rigid and resistant material, in particular one having a higher rigidity than the conductive material that makes up the bars 18 and the hooks 20 of said commutator 14, and comprising essentially a first forming head 51 provided with a first forming surface 51A properly counter shaped with respect to the shape of said first cuttings 21. Said first forming head 51 is provided at the end of a support arm 52 and is preferably obtained integral with said support arm 52.

Advantageously, said first forming head 51 also comprises a second forming surface 51B, arranged higher than said first forming surface 51A and essentially inclined with respect to the same, configured to form a groove adapted to receive the internal surface 20A of said hook 20 so as to provide a reference during the phase of obtaining the first cutting 21.

Figure 6B illustrates a second tool 50', essentially similar to said first tool 50 but adapted for cold forming by pressure said second cuttings 21' in a commutator 14, if said cuttings 21' have a shape that is more curved or at any rate different from that of said first cuttings 21.

In fact, said second tool 50' essentially comprises a corresponding forming head 51' provided with a first forming surface 51A' appropriately counter-shaped with respect to the shape of said second cutting 21', and thus preferably more curved with respect to the shape of the first surface 51A of said first tool 50. Said forming head 51' is provided at the end of second support arm 52' and is preferably obtained integrally with said support arm 52'.

Advantageously, the forming head 51' of said second tool 50' also comprises a second forming surface 51B' arranged higher than said first forming surface 51A', and having the same function as the corresponding second surface 51B of said first tool 50.

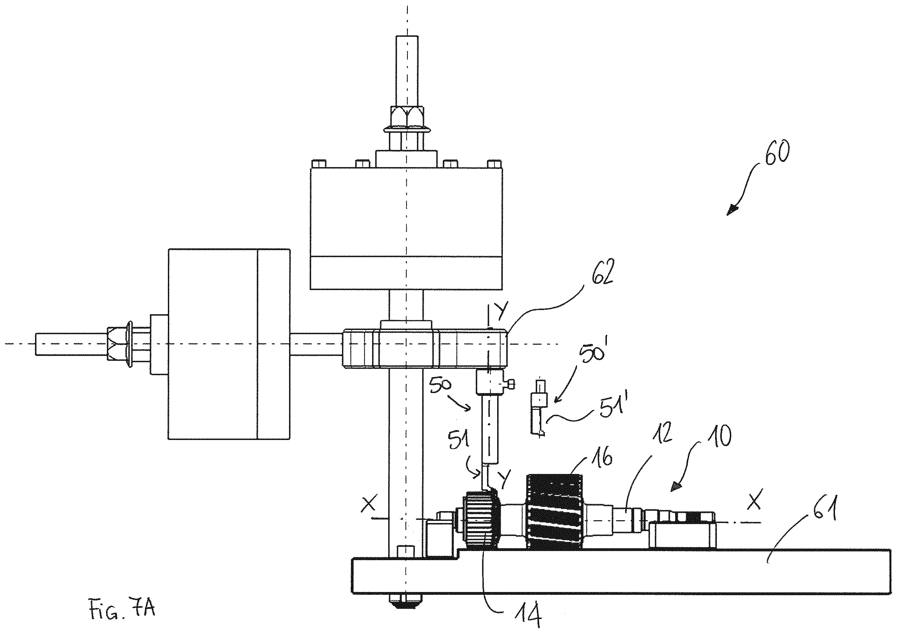

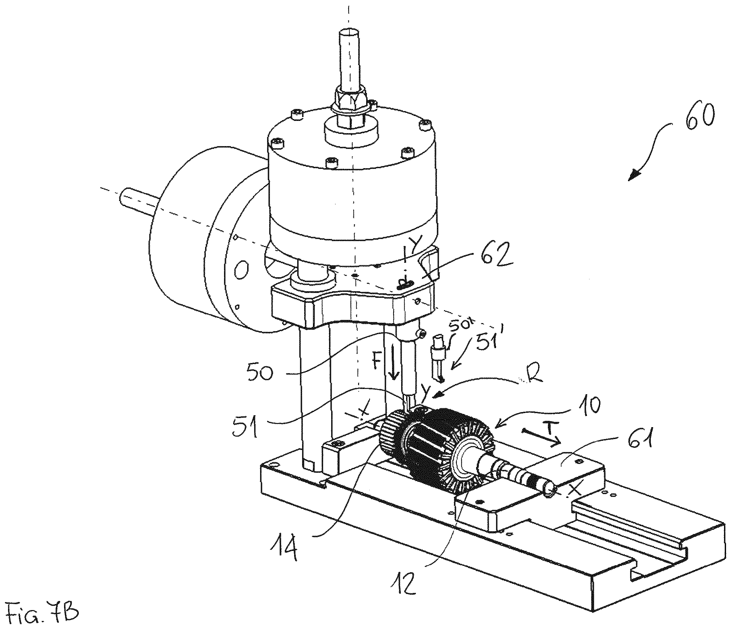

As shown in figures 7A and 7B, said first and second tool 50, 50' are suitable to be advantageously mounted on or incorporated in an apparatus 60 for forming in an automated mode the cuttings 21, 21' in a commutator for obtaining a rotor 10 according to the present invention, as explained later in greater detail.

Said apparatus 60 comprises at least one of said tools 50, 50' adapted to operate in such a way that the first surface 51A, 51A' of the relative forming head 51, 51' cooperates with said plurality of bars 18 of a commutator to engrave an area between the internal surface 20A of the hooks 20 and the corresponding bar 18 when in the open position, and to thus obtain said cuttings 21, 21'. In this phase, the hooks 20 of the commutator are in the open position and the winding wire 22 has not yet been positioned.

Preferably, said apparatus 60 is provided with a first support structure 61 adapted to support at least in a rotatable manner around said first axis X-X the shaft 12 of the rotor 10, on which are splined in a known manner a rotor lamination stack and a conventional commutator, that is, one not provided with cuttings 21, 21', and a second support structure 62 adapted to support said at least one tool 50, 50' slidably at least along a second axis Y-Y orthogonal to said first axis X-X.

Said apparatus 60 also comprises first and second displacing means (not shown in the figures), activated in a coordinated manner by a known and conventional command and control unit (not shown), aptly programmed, to provide said cuttings 21, 21' on a commutator in an automated mode.

In particular, said first displacing means are advantageously associated to the tool 50, 50'for reciprocating it between a non-operative position, wherein said forming head 51, 51' is lifted with respect to said commutator, and an operative position, wherein said forming head 51, 51' is in contact with said commutator, and in particular the first forming surface 51A, 51A' presses on an area between the internal surface 20A of a hook 20 and the corresponding bar 18, engraving it in such a manner as to form a corresponding slot 21, 21'.

Preferably, the movement accomplished by said tool 50, 50' in the displacement between said non-operative position and said operative position comprises at least one translation along a direction parallel to the second axis Y-Y (indicated by the arrow F in figure 7B), and thus perpendicular to the axis X-X of extension of the rotor 10.

However, since said cuttings 21, 21' are formed on an area between the internal surface 20A of said hooks 20 and the corresponding bars 18, it is necessary for the forming head 51, 51' of the tool 50, 50' to insert itself below it in the forming step; thus, preferably, said first displacing means are adapted to also displace said tool 50, 50' in a direction essentially parallel to the X-X axis of extension of the shaft 12 of the rotor 10 (indicated by the arrow T in figure 7B). Alternatively, the displacement along said first axis X-X, useful for the correct positioning of the forming head 51, 51' on the internal surface of the hook 20A, can be achieved by axially displacing the commutator, for example, by means of said second displacing means.

Said second displacing means (not shown in the figures), are instead advantageously associated to the shaft 12 of the rotor 10 to rotate the latter, as shown by the arrow R of figure 7B, in such a way that the commutator splined on it rotates jointly therewith.

Said first displacing means can for example be formed by a powered slider connected to the support arm 52, 52' of said tool 50, 50', and movable between two travel end positions corresponding respectively to the idle position and to the operative position of the forming head 51, 51'.

Said second displacing means can for example include a grooved driving belt, engaged with a gear wheel mounted coaxially to the drive shaft so as to transmit the rotational movement generated by an electric motor. Alternatively, said second displacing means 64 can include a tool connected to a step motor capable of rotating the commutator.

In figures 7A and 7B, the support arms 52, 52' of said first and second tool 50, 50' extend along said second axis Y-Y; however, other embodiments are possible wherein said support arms 52, 52' extend along axes other than said second axis Y-Y, for example, they are parallel to the axis X-X of extension of the rotor 10.

The process will now be described for the automated construction of a commutator 14 of a rotor 10 for a universal electric motor according to the present invention by means of an apparatus 60 according to the present invention.

In the embodiment shown in figures 7A and 7B, said apparatus 60 is adapted to incorporate a single forming tool chosen from said first tool 50 and said second tool 50'.

Firstly, therefore, on said apparatus 60 is mounted the first tool 50 for obtaining said plurality of first cuttings 21. The tool 50 is positioned on the first support structure 61 while the commutator is arranged on the second support structure 62.

In figures 7A and 7B said tool 50 is positioned above the commutator and in such a manner that said support arm 52 extends along an axis Y-Y orthogonal to the axis X-X of extension of the shaft 12 of the rotor 10. Other different arrangements are also possible: for example, the tool 50 can be positioned laterally to or lower than the commutator.

Moreover, in an advantageous embodiment not shown in the figures, said apparatus 60 may comprise at least one pair of first tools 50, arranged for example on diametrically opposite sides of the commutator, to reduce the times necessary for obtaining said plurality of first cuttings 21 on the commutator.

At this point, said command and control unit activates in a coordinated manner said first and second operating means, respectively operatively connected to the tool 50 and to the commutator, for forming said plurality of first cuttings 21.

In fact, while said first displacement means displaces the forming head 51 from said first tool 50 in an alternating manner between said non-operative position and said operative position, said second displacement means rotates sequentially the shaft 12 of the rotor 10 around said axis X-X, positioning each time one of said hooks 20 in the path of movement of said forming head 51, in such a manner that for each travel from the non-operative position to the operative position the latter presses on an area between the internal surface 20A of a hook 20 an the corresponding bar 18, obtaining by cold-forming by pressure a cutting 21 having the geometry illustrated above.

In other words, the operation of the apparatus 60 for automatically forming a plurality of first cuttings 21 on the commutator 14 according to the present invention is essentially as follows: firstly, a commutator of a rotor is prearranged in such a manner that a first bar 18 of said plurality of bars 18 that form the external surface of a commutator, with the respective hook 20 in an open position, is adjacent to the forming head 51 of said first tool 50, which assumes a non-operative position.

Subsequently, said first displacement means displace the forming head 51 from the non-operative position to the operative position; during this displacement, the second surface 51B of the forming head 51 serves as reference for the correct positioning of the first forming surface 51A, in such a manner that the same engraves by pressure the an area between the internal surface 20A of a hook 20 and the corresponding bar 18, thus obtaining a first cutting 21 having an appropriate and counter-shaped geometry.

In particular, preferably, the forming head 51 is displaced from the non-operative position to the operative position through at least a translation along said second axis Y-Y, to engrave the area between the internal surface 20A of a hook 20 and the corresponding bar 18, and possibly through a translation along an axis parallel to the X-X axis, to insert itself under the hook 20; alternatively, this translation can be obtained by displacing the commutator axially.

Said forming head 51 is then lifted from the internal surface of the hook 20, and reenters toward the non-operative position through a displacement in reverse; subsequently, or at the same time as said operation, said second displacing means move said rotor 10 with a rotation around said axis X-X, by an angle sufficient to bring a second bar 18 of the commutator, preferably adjacent to said first bar, in the path followed by the forming head 51 toward the operative position.

The steps described above are then repeated until at least one cutting 21 is obtained for each hook 20 of the commutator 14.

Subsequently, the rotor 10 is collected by the apparatus 60 and displaced toward a winding station, in which the winding wire 20 is wound in a known and conventional manner between the rotor lamination stack 16 and the commutator 14, forming each time one turn around each of said hooks 20.

To lock the two free ends of the winding wire 22, the rotor 10 is displaced on an apparatus 60 on which said second tool is mounted 50'. A pertinent device, such as for example an optical or mechanical polarization viewer of the rotor 10, localizes the position of said free ends, generally located by two diametrically opposite bars 18 of the commutator 14, and positions one of said bars 18 at the forming head 51' of the second tool 50' which, with movements essentially similar to those described above for forming the first cutting 21, forms a second cutting 21' in a zone adjacent of the internal surface 20A of the hook 20.

The commutator is then rotated by desired angle, for example 180°, in such a manner as to bring the other bar 18 opposite the forming head 51' of the second tool 50' to form the second cutting 21'.

Alternatively, said latter second cutting 21' can be formed by means of a further second tool 50', mounted on said apparatus 60 advantageously in a diametrically opposite position of the commutator.

At this point, the rotor 10 is displaced to an end station, where there is an arm adapted to press with a predetermined force on the hook 20 to displace it from the initial open position to the final closed position, wherein the hook 20 embraces the portion 24 of wire 22, and possibly the free ends of the same, and it is accosted to the bar 18, preferably up to where the free end of the hook 20 is brought into contact with the respective bar 18.

During this operation it is also possible to concurrently apply on the hooks a predetermined energy, for example one set by an operator on the basis of experiments or calculations or self-regulated according to feedback or self-learning algorithms integrated in the command and control unit, adapted to develop on the hook 20 a temperature that is sufficient to partially deform in a localized manner the wire insulating enamel.

However, thanks to the presence of the cuttings 21, 21' on the area between the internal surface 20A of a hook 20 and the corresponding bar 18, the insulating enamel has already been partially removed by friction and abrasion from the edge portions 21C of the cuttings 21, 21' during the closing movement of the hooks 20, and consequently the temperature that is to be generated by the application of energy remains sufficiently low to completely preserve the integrity and physical characteristics of the wire 22 and the bars 18 of the commutator 14.

According to a further quite advantageous embodiment, not shown in the figures, said apparatus 60 can incorporate at least one first tool 50, for forming said first cuttings 21, and preferably one pair of first tools 50 for example arranged diametrically opposite each other, and at least one second tool 50', for forming said second cuttings 21', so that in a single forming station it is possible to obtain a commutator 14 with said first and second cuttings 21, 21' appropriately arranged.

In this case, in the subsequent winding station of the rotor 10 it will be necessary to provide a device that locates the bars 18 on which said second cuttings 21' have been formed, so as to start and end the winding of the wire 22 on them.

Alternatively, said second cuttings 21' can be made substantially on all the bars 18 of the commutator 14; in this manner, advantageously, in the winding step it will not be necessary to position the commutator with a particular orientation nor to provide a device adapted to locate the bars on which said second cuttings 21' have been obtained.

In summary and to generalize, the process for obtaining a commutator 14 of a rotor 10 according to the present invention by means of an apparatus 60 comprises essentially the steps of:
a) arranging a commutator of a rotor near the forming head 51, 51' of said at least one tool 50, 50';
b) displacing said at least one tool 50, 50' so that the first forming surface 51A, 51A' of said forming head 51, 51' engraves an area between the internal surface 20A of a hook 20 and the corresponding bar 18 to form said at least one first cuttings 21, 21';
c) displacing said at least one tool 50, 50' so as to lift said first forming surface 51A, 51A' of said forming head 51, 51' from said first hook 20;
d) subsequently or concurrently with said step c) displacing said commutator so as to position a second hook 20, different from said first hook 20, next to said forming head 51, 51'.

In conclusion, it is evident from the above how the present invention achieves the initially foreseen objectives and advantages: in effect, a rotor for a universal electric motor is advantageously proposed in which the electrical and mechanical connection between the hooks of the commutator bars and the winding wires, for example made with a material alternative to copper and in particular having a melting temperature lower than copper, is achieved in a stable and reliable manner, without deteriorating any component of the rotor.

In effect, thanks to the provision of at least a plurality of first cuttings 21, it is possible to achieve, during the operation of closing the hooks, the localized removal of the insulating enamel that coats the wire simply by means of friction and abrasion, allowing a good electrical connection between the wire and the commutator and the maintenance of the properties of the wire that forms the winding of the rotor, guaranteeing a stable mechanical connection, even when the material which makes up the wire has a melting temperature lower than the melting temperature of the material that forms the commutator bars, for example in the case in which the former is aluminum and the latter is copper.

Moreover, a process for making a rotor 10 is provided according to the present invention, obtained by using appropriate tools and a properly designed apparatus, which is easily implemented in the scope of a highly automated industrial plant.

Naturally, the present invention is amenable to many applications, modifications or variants, without thereby departing from the scope of patent protection as defined by the attached claims.

Moreover, the materials and equipment used for achieving the present invention, as well as the shapes and dimensions of the individual components, can be the most suitable according to the specific requirements.

## Claims

1. Rotor (10) for an universal electric motor comprising a commutator (14) and a rotor lamination stack (16) arranged coaxially with each other along a first axis (X-X), and at least one wire (22) of a rotor winding, obtained in a first conductive material and covered with an electrically insulating enamel, said wire (22) being adapted to extend between said commutator (14) and said rotor lamination stack (16), said commutator (14) comprising a plurality of bars (18) obtained in a second conductive material and arranged circumferentially adjacent to each other to form a cylindrical body, and whose ends facing said rotor lamination stack (16) each have a hook (20) for said wire (22), each of said hooks (20) being adapted to be moved between an open initial position, wherein it allows the positioning of a portion (24) of said wire (22), and a final closed position, wherein it embraces with an internal surface (20A) said at least a portion (24) of said wire (22) and is approached to the bar (18), **characterized in that** in an area between the internal surface (20A) of each of said hooks (20) and the corresponding bar (18) at least one first single cutting (21) is formed, said first cutting being recessed relative to the surface of the corresponding bar (18) and having a top opening (23) with a width (A) smaller than the diameter (D) of said wire (22) so that when said hook (20) is displaced from the open position to the closed position, said single cutting (21) partially contains said portion (24) of said wire (22) and so that the edge portions (21C) of said opening (23) locally remove by friction and abrasion said electrically insulating enamel covering said portion (24) of said wire (22) to allow direct contact between said first conductive material and said second conductive material and therefore the electrical connection between said wire (22) and said bar (18).

2. Rotor (10) according to claim 1, wherein said top opening (23) has a width (A) defined by opposed and facing edge portions (21C) which is comprised between 70 - 90% of the diameter (D) of said wire (22).

3. Rotor (10) according to claim 1 or 2, wherein each of said first cuttings (21) has a depth (H) which is smaller relative to the diameter (D) of said wire (22).

4. Rotor (10) according to any one of claims 1 to 3, wherein each of said first cuttings (21) extends transversally with respect to a corresponding bar (18) and it is opened at the sides.

5. Rotor (10) according to any one of claims 1 to 4, wherein at least a pair of bars (18) of said commutator (14) further comprise a second single cutting (21') adjacent to said first single cutting (21), adapted to cooperate and to retain a free end of said wire (22), said second cutting (21') comprising a top opening (23) having a width (A) smaller than the diameter (D) of said wire (22).

6. Rotor (10) according to claim 5, wherein each of said second cuttings (21') extends transversally with respect to a corresponding bar (18) along a curved path around a respective hook (20).

7. Method for associate at least a hook (20) of a bar (18) of a commutator (14) for a rotor (10) according to claim 1, to at least one portion (24) of wire (22) of a rotor winding, said wire (22) being covered of electrically insulating enamel, said method comprising the following steps:
- positioning said commutator (14) on a support;
- winding at least a portion (24) of said wire (22) around said hook (20);
- displacing said hook (20) from an initial opened position to a final closed position wherein it embraces with an internal surface (20A) said at least a portion (24) of said wire (22) and is approached to the bar (18), pressing said hook (20) with a predetermined force such that said at least a single cutting (21) partially receives said corresponding portion (24) of said wire (22) and that the edge portions (21C) defining the top opening (23) of said cutting (21) locally remove by friction and abrasion said electrically insulating enamel covering said portion (24) of said wire (22) to allow direct contact between said first conductive material and said second conductive material and therefore the electrical connection between said wire (22) and said bar (18).

8. Apparatus (60) for obtaining a commutator (14) of a rotor (10) according to claim 1, comprising at least one tool (50, 50') provided with a forming head (51, 51') adapted to cooperate with said plurality of bars (18) for forming single cuttings (21, 21'), said forming head (51, 51') comprising a first forming surface (51A, 51A') adapted to engrave an area between said internal surface (20A) of each of said hooks (20) and the corresponding bar (18) to form at least one counter-shaped single cutting (21, 21'), said forming surface (51A, 51A') having a width smaller than the diameter (D) of said wire (22) so that when said hook (20) is displaced from the open position to the closed position, said single cutting (21, 21') partially receives said portion (24) of said wire (22) and said edge portions (21C) of said opening (23) locally remove by friction and abrasion said electrically insulating enamel covering said portion (24) of said wire (22) to allow direct contact between said first conductive material and said second conductive material and therefore the electrical connection between said wire (22) and said bar (18).

9. Apparatus (60) according to claim 8, comprising a first support structure (61) adapted to support said commutator (14) at least in a rotatable way around said first axis (X-X), and a second support structure (62) adapted to slidably support said at least one tool (50, 50') at least along a second axis (Y-Y) orthogonal to said first axis (X-X).

10. Apparatus (60) according to claim 9, comprising first displacing means for reciprocating said at least a tool (50, 50') at least along said second axis (Y-Y) between a non-operative position, wherein said forming head (51, 51') is lifted from said commutator (14) and an operative position, wherein said first forming surface (51A, 51A') of said forming head (51, 51') engraves an area between the internal surface (20A) of each of said hooks (20) and the corresponding bar (18) to form a corresponding single cutting (21, 21'), said apparatus (60) further comprising second displacing means adapted to sequentially displace at least in rotatable way said commutator (14) so as to bring, from time to time, a different hook (20) in the path of said forming head (51, 51') along said second axis (Y-Y).

11. Process for obtaining a commutator (14) of a rotor (10) according to claim 1 by means of an apparatus (60) according to claim 8, comprising the following steps:
a) positioning a commutator such that a first hook (20) is adjacent to said forming head (51, 51') of said at least one tool (50, 50');
b) displacing said at least one tool (50, 50') such that said first forming surface (51A, 51A') of said forming head (51, 51') engraves an area between the internal surface (20A) of a first hook (20) and the corresponding bar (18) for obtaining said at least a first single cutting (21, 21');
c) displacing said at least one tool (50, 50') so as to lift said first forming surface (51A, 51A') of said forming head (51, 51') from said first hook ( 20);
d) subsequently or simultaneously to said step c), displacing said commutator for positioning a second hook (20), different from said first hook (20), adjacent to said forming head (51, 51').

## Patentansprüche

1. Rotor (10) für einen elektrischen Universalmotor, umfassend einen Kommutator (14) und ein Rotorblechpaket (16), die koaxial zueinander entlang einer ersten Achse (X-X) angeordnet sind, und wenigstens einen Draht (22) einer Rotorwicklung, der aus einem ersten leitenden Material hergestellt und mit einem elektrisch isolierenden Lack überzogen ist, wobei der Draht (22) so beschaffen ist, dass er sich zwischen dem Kommutator (14) und dem Rotorblechpaket (16) erstreckt, wobei der Kommutator (14) eine Vielzahl von Stäben (18) umfasst, die aus einem zweiten leitenden Material bestehen und in Umfangsrichtung nebeneinander angeordnet sind, um einen zylindrischen Körper auszubilden, und deren dem Rotorblechpaket (16) zugewandten Enden jeweils einen Haken (20) für den Draht (22) aufweisen, wobei jeder der Haken (20) zwischen einer offenen Ausgangsposition, in der er die Positionierung eines Abschnitts (24) des Drahts (22) ermöglicht, und einer geschlossenen Endposition bewegt werden kann, in der er mit einer Innenfläche (20A) den wenigstens einen Abschnitt (24) des Drahts (22) umschließt und an den Stab (18) angenähert ist, **dadurch gekennzeichnet, dass** in einem Bereich zwischen der Innenfläche (20A) jedes der Haken (20) und dem entsprechenden Stab (18) wenigstens ein erster einzelner Einschnitt (21) ausgebildet ist, wobei der erste Einschnitt in Bezug auf die Oberfläche des entsprechenden Stabs (18) ausgenommen ist und eine obere Öffnung (23) mit einer Breite (A) aufweist, die kleiner ist als der Durchmesser (D) des Drahts (22), so dass, wenn der Haken (20) von der offenen Position in die geschlossene Position verschoben wird, der einzelne Einschnitt (21) den Abschnitt (24) des Drahtes (22) teilweise enthält und die Randabschnitte (21C) der Öffnung (23) den elektrisch isolierenden Lack, der den Abschnitt (24) des Drahtes (22) bedeckt, lokal durch Reibung und Abrieb entfernen, um einen direkten Kontakt zwischen dem ersten leitenden Material und dem zweiten leitenden Material und somit die elektrische Verbindung zwischen dem Draht (22) und dem Stab (18) zu ermöglichen.

2. Rotor (10) nach Anspruch 1, bei dem die obere Öffnung (23) eine Breite (A) aufweist, die durch gegenüberliegende und einander zugewandte Randabschnitte (21 C) definiert ist und zwischen 70 und 90 % des Durchmessers (D) des Drahtes (22) beträgt.

3. Rotor (10) nach Anspruch 1 oder 2, bei dem jeder der ersten Einschnitte (21) eine Tiefe (H) aufweist, die kleiner ist als der Durchmesser (D) des Drahtes (22).

4. Rotor (10) nach einem der Ansprüche 1 bis 3, bei dem sich jeder der ersten Einschnitte (21) quer zu einem entsprechenden Stab (18) erstreckt und an den Seiten geöffnet ist.

5. Rotor (10) nach einem der Ansprüche 1 bis 4, bei dem wenigstens zwei Stäbe (18) des Kommutators (14) außerdem einen zweiten einzelnen Einschnitt (21') angrenzend an den ersten einzelnen Einschnitt (21) aufweisen, die dazu eingerichtet sind, zusammenzuwirken und ein freies Ende des Drahtes (22) zu halten, wobei der zweite Einschnitt (21') eine obere Öffnung (23) mit einer Breite (A) aufweist, die kleiner ist als der Durchmesser (D) des Drahtes (22).

6. Rotor (10) nach Anspruch 5, bei dem sich jeder der zweiten Einschnitte (21') quer zu einem entsprechenden Stab (18) entlang einer gekrümmten Bahn um einen entsprechenden Haken (20) erstreckt.

7. Verfahren zum Verbinden wenigstens eines Hakens (20) eines Stabes (18) eines Kommutators (14) für einen Rotor (10) nach Anspruch 1 mit wenigstens einem Abschnitt (24) eines Drahtes (22) einer Rotorwicklung, wobei der Draht (22) mit einem elektrisch isolierenden Lack überzogen ist und das Verfahren die folgenden Schritte umfasst:
- Positionieren des Kommutators (14) auf einem Träger;
- Wickeln wenigstens eines Abschnitts (24) des Drahtes (22) um den Haken (20);
- Verschieben des Hakens (20) aus einer geöffneten Ausgangsposition in eine geschlossene Endposition, in der er mit einer Innenfläche (20A) den wenigstens einen Abschnitt (24) des Drahtes (22) umschließt und an deb Stab (18) angenähert wird, Pressen des Hakens (20) mit einer vorbestimmten Kraft, so dass der wenigstens eine Einschnitt (21) den entsprechenden Abschnitt (24) des Drahts (22) teilweise aufnimmt und die Randabschnitte (21C), die die obere Öffnung (23) des Einschnitts (21) definieren, den elektrisch isolierenden Lack, der den Abschnitt (24) des Drahts (22) bedeckt, lokal durch Reibung und Abrieb entfernen, um einen direkten Kontakt zwischen dem ersten leitenden Material und dem zweiten leitenden Material und somit die elektrische Verbindung zwischen dem Draht (22) und dem Stab (18) zu ermöglichen.

8. Vorrichtung (60) zum Herstellen eines Kommutators (14) eines Rotors (10) nach Anspruch 1, die wenigstens ein Werkzeug (50, 50') umfasst, das mit einem Formkopf (51, 51') versehen ist, der dazu eingerichtet ist, mit der Vielzahl von Stäben (18) zusammenzuwirken, um einzelne Einschnitte (21, 21') auszubilden, wobei der Formkopf (51, 51') eine erste Formfläche (51A, 51A') aufweist, die dazu eingerichtet ist, einen Bereich zwischen der Innenfläche (20A) jedes der Haken (20) und dem entsprechenden Stab (18) zu gravieren, um wenigstens einen gegengeformten einzelnen Einschnitt (21, 21') auszubilden, wobei die Formfläche (51A, 51A') eine Breite aufweist, die kleiner ist als der Durchmesser (D) des Drahtes (22), so dass, wenn der Haken (20) aus der offenen Position in die geschlossene Position verschoben wird, der einzelne Einschnitt (21, 21') den Abschnitt (24) des Drahts (22) und die Randabschnitte (21 C) der Öffnung (23) teilweise aufnimmt und den elektrisch isolierenden Lack, der den Abschnitt (24) des Drahts (22) bedeckt, lokal durch Reibung und Abrieb entfernt, um einen direkten Kontakt zwischen dem ersten leitenden Material und dem zweiten leitenden Material und somit die elektrische Verbindung zwischen dem Draht (22) und dem Stab (18) zu ermöglichen.

9. Vorrichtung (60) nach Anspruch 8, umfassend eine erste Haltestruktur (61), die dazu eingerichtet ist, den Kommutator (14) wenigstens drehbar um die erste Achse (X-X) zu halten, und eine zweite Haltestruktur (62), die dazu eingerichtet ist, das wenigstens eine Werkzeug (50, 50') wenigstens entlang einer zweiten Achse (Y-Y) orthogonal zu der ersten Achse (X-X) gleitend zu halten.

10. Vorrichtung (60) nach Anspruch 9, umfassend eine erste Verschiebeeinrichtung zum Hin- und Herbewegen des wenigstens einen Werkzeugs (50, 50') wenigstens entlang der zweiten Achse (Y-Y) zwischen einer Ruheposition, in der der Formkopf (51, 51') von dem Kommutator (14) abgehoben ist, und einer Betriebsposition, in der die erste Formfläche (51A, 51A') des Formkopfs (51, 51') einen Bereich zwischen der Innenfläche (20A) jedes der Haken (20) und dem entsprechenden Stab (18) graviert, um einen entsprechenden einzelnen Einschnitt (21, 21') auszubilden, wobei die Vorrichtung (60) weiterhin eine zweite Verschiebeeinrichtung umfasst, die dazu eingerichtet ist, den Kommutator (14) sequentiell wenigstens drehbar zu verschieben, um von Zeit zu Zeit einen anderen Haken (20) in den Weg des Formkopfes (51, 51') entlang der zweiten Achse (Y-Y) zu bringen.

11. Verfahren zur Herstellung eines Kommutators (14) eines Rotors (10) nach Anspruch 1 mittels einer Vorrichtung (60) nach Anspruch 8, umfassend folgende Schritte:
a) Positionieren eines Kommutators, so dass sich ein erster Haken (20) neben dem Formkopf (51, 51') des wenigstens einen Werkzeugs (50, 50') befindet;
b) Verschieben des wenigstens einen Werkzeugs (50, 50'), so dass die erste Formfläche (51A, 51A') des Formkopfes (51, 51') einen Bereich zwischen der Innenfläche (20A) eines ersten Hakens (20) und dem entsprechenden Stab (18) graviert, um den wenigstens einen ersten einzelnen Einschnitt (21, 21') zu erhalten;
c) Verschieben des wenigstens einen Werkzeugs (50, 50'), um die erste Formfläche (51A, 51A') des Formkopfs (51, 51') von dem ersten Haken (20) abzuheben; und
d) Verschieben des Kommutators zum Positionieren eines zweiten Hakens (20), der sich von dem ersten Haken (20) unterscheidet, neben dem Formkopf (51, 51') anschließend oder gleichzeitig zu Schritt c).

## Revendications

1. Rotor (10) pour moteur électrique universel comprenant un collecteur (14) et un empilement de tôles de rotor (16) disposés coaxialement l'un à l'autre selon un premier axe (X-X), et au moins un fil (22) d'un bobinage rotorique, obtenu dans un premier matériau conducteur et recouvert d'un émail électriquement isolant, ledit fil (22) étant adapté pour s'étendre entre ledit collecteur (14) et ledit empilement de tôles rotoriques (16), ledit collecteur (14) comprenant une pluralité de barres (18) obtenues dans un second matériau conducteur et disposées circonférentiellement adjacentes les unes aux autres pour former un corps cylindrique, et dont des extrémités tournées vers ledit empilement de tôles de rotor (16) comportent chacune un crochet (20) pour ledit fil (22), chacun desdits crochets (20) étant apte à être déplacé entre une position initiale ouverte, dans laquelle il permet le positionnement d'une portion (24) dudit fil (22), et une position finale fermée, dans laquelle il entoure par une surface interne (20A) ladite au moins une portion (24) dudit fil (22) et est approché de la barre ( 18), **caractérisé en ce que** dans une zone entre la surface interne (20A) de chacun desdits crochets (20) et la barre (18) correspondante au moins une première découpe (21) simple est formée, ladite première découpe étant en retrait par rapport à la surface de la barre correspondante (18) et ayant une ouverture supérieure (23) avec une largeur (A) inférieure au diamètre (D) dudit fil (22) de sorte que lorsque ledit crochet (20) est déplacé de la position ouverte à la position fermée, ladite découpe (21) simple contient partiellement ladite portion (24) dudit fil (22) et de sorte que les portions de bord (21C) de ladite ouverture (23) retirent localement par frottement et abrasion ledit émail électriquement isolant recouvrant ladite portion (24) dudit fil (22) pour permettre un contact direct entre ledit premier matériau conducteur et ledit second matériau conducteur et donc la liaison électrique entre ledit fil (22) et ladite barre (18).

2. Rotor (10) selon la revendication 1, dans lequel ladite ouverture supérieure (23) a une largeur (A) définie par des portions de bord opposées et se faisant face (21C) qui est comprise entre 70 et 90 % du diamètre (D) dudit fil (22).

3. Rotor (10) selon la revendication 1 ou 2, dans lequel chacune desdites premières découpes (21) a une profondeur (H) qui est plus petite que le diamètre (D) dudit fil (22).

4. Rotor (10) selon l'une quelconque des revendications 1 à 3, dans lequel chacune desdites premières découpes (21) s'étend transversalement par rapport à une barre correspondante (18) et est ouverte sur les côtés.

5. Rotor (10) selon l'une quelconque des revendications 1 à 4, dans lequel au moins une paire de barres (18) dudit collecteur (14) comprend en outre une seconde découpe (21') simple adjacente à ladite première découpe (21) simple, adaptée pour coopérer et retenir une extrémité libre dudit fil (22), ladite seconde découpe (21') comprenant une ouverture supérieure (23) ayant une largeur (A) inférieure au diamètre (D) dudit fil (22).

6. Rotor (10) selon la revendication 5, dans lequel chacune desdites secondes découpes (21') s'étend transversalement par rapport à une barre correspondante (18) le long d'un trajet courbe autour d'un crochet (20) respectif.

7. Procédé pour associer au moins un crochet (20) d'une barre (18) d'un collecteur (14) pour un rotor (10) selon la revendication 1, à au moins une portion (24) de fil (22) d'un bobinage rotorique, ledit fil (22) étant recouvert d'émail électriquement isolant, ledit procédé comprenant les étapes suivantes :
- positionner ledit collecteur (14) sur un support ;
- enrouler au moins une portion (24) dudit fil (22) autour dudit crochet (20) ;
- déplacer ledit crochet (20) d'une position ouverte initiale à une position fermée finale dans laquelle il entoure par une surface interne (20A) ladite au moins une portion (24) dudit fil (22) et est approché de la barre (18), presser ledit crochet (20) avec une force prédéterminée de sorte que ladite au moins une découpe (21) simple reçoive partiellement ladite portion correspondante (24) dudit fil (22) et que les portions de bord (21C) définissant l'ouverture supérieure (23) de ladite découpe (21) retirent localement par frottement et abrasion ledit émail électriquement isolant recouvrant ladite portion (24) dudit fil (22) pour permettre un contact direct entre ledit premier matériau conducteur et ledit second matériau conducteur et donc la connexion électrique entre ledit fil (22) et ladite barre (18).

8. Appareil (60) pour obtenir un collecteur (14) d'un rotor (10) selon la revendication 1, comprenant au moins un outil (50, 50') muni d'une tête de formage (51, 51') apte à coopérer avec ladite pluralité de barres (18) pour former des découpes (21, 21') simples, ladite tête de formage (51, 51') comprenant une première surface de formage (51A, 51A') adaptée pour graver une zone entre ladite surface interne (20A) de chacun desdits crochets (20) et la barre correspondante (18) pour former au moins une découpe (21, 21') simple en contre-forme, ladite surface de formage (51A, 51A') ayant une largeur plus petite que le diamètre (D) dudit fil (22) de sorte que lorsque ledit crochet (20) est déplacé de la position ouverte à la position fermée, ladite découpe (21, 21') simple reçoit partiellement ladite portion (24) dudit fil (22) et lesdites portions de bord (21C) de ladite ouverture (23) retirent localement par frottement et abrasion ledit émail électriquement isolant recouvrant ladite portion (24) dudit fil (22) pour permettre un contact direct entre ledit premier matériau conducteur et ledit second matériau conducteur et donc la connexion électrique entre ledit fil (22) et ladite barre (18).

9. Appareil (60) selon la revendication 8, comprenant une première structure de support (61) adaptée pour supporter ledit collecteur (14) au moins d'une manière rotative autour dudit premier axe (X-X), et une seconde structure de support (62) adaptée pour supporter de manière coulissante ledit au moins un outil (50, 50') au moins le long d'un second axe (Y-Y) orthogonal audit premier axe (X-X).

10. Appareil (60) selon la revendication 9, comprenant des premiers moyens de déplacement pour faire aller et venir ledit au moins un outil (50, 50') au moins le long dudit second axe (Y-Y) entre une position non opérationnelle, dans laquelle ladite tête de formage (51, 51') est relevée dudit collecteur (14), et une position de fonctionnement, dans laquelle ladite première surface de formage (51A, 51A') de ladite tête de formage (51, 51') grave une zone entre la surface interne (20A) de chacun desdits crochets (20) et la barre (18) correspondante pour former une découpe (21, 21') simple correspondante, ledit appareil (60) comprenant en outre des seconds moyens de déplacement adaptés pour déplacer séquentiellement au moins de manière rotative ledit collecteur (14) de manière à amener, par intervalles de temps, un crochet différent (20) sur le trajet de ladite tête de formage (51, 51') le long dudit second axe (Y-Y).

11. Procédé d'obtention d'un collecteur (14) d'un rotor (10) selon la revendication 1 au moyen d'un appareil (60) selon la revendication 8, comprenant les étapes suivantes :
a) positionner un collecteur de sorte qu'un premier crochet (20) soit adjacent à ladite tête de formage (51, 51') dudit au moins un outil (50, 50') ;
b) déplacer ledit au moins un outil (50, 50') de sorte que ladite première surface de formage (51A, 51A') de ladite tête de formage (51, 51') grave une zone entre la surface interne (20A) d'un premier crochet (20) et la barre (18) correspondante pour obtenir ladite au moins une première découpe (21, 21') simple ;
c) déplacer ledit au moins un outil (50, 50') de manière à soulever ladite première surface de formage (51A, 51A') de ladite tête de formage (51, 51') dudit premier crochet(20) ;
d) ultérieurement ou simultanément à ladite étape c), déplacer ledit collecteur pour positionner un second crochet (20), différent dudit premier crochet (20), adjacent à ladite tête de formage (51, 51').
